# EUROPEAN PATENT APPLICATION

(11) **EP 4 554 309 A1**
(43) Date of publication of application: **14.05.2025**
(21) Application number: 22949926.4
(22) Date of filing: 08.07.2022
(51) Int. Cl.: H04W 74/00

(54) **INFORMATION RECORDING METHOD AND APPARATUS, INFORMATION SENDING METHOD AND APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Dehns Germany Partnerschaft mbB
(86) International application number: PCT/CN2022/104765
(87) International publication number: WO 2024/007346

(57) **Abstract**

The present invention provides an information recording method and apparatus, an information sending method and apparatus, and a storage medium. The information recording method comprises: recording related information of a random access channel (RACH) configuration, wherein the RACH configuration is associated with one or more first characteristics. According to the present invention, a terminal side can be supported to record related information of an RACH configuration associated with one or more first characteristics, so as to assist a network side device in optimizing the RACH configuration, and the availability is high.

## Description

### TECHNICAL FIELD

The present disclosure relates to the field of communications, and in particular to an information recording method and apparatus, an information sending method and apparatus, and a storage medium.

### BACKGROUND

In Release 17 (R17), it is expected that the network side device can realize early identification of R17 features, so that the network side can subsequently provide corresponding reasonable configurations. However, there is no suitable technology in the art that can realize the early identification of terminal features/feature combinations.

### SUMMARY

In order to overcome problems existing in related art, embodiments of the present disclosure provide an information recording method and apparatus, an information sending method and apparatus, and a storage medium.

According to a first aspect of embodiments of the present disclosure, an information recording method is provided. The method is performed by a terminal and includes:
recording relevant information of a random access channel (RACH) configuration, where the RACH configuration is associated with one or more first features.

Optionally, the RACH configuration is an RACH configuration used by the terminal.

Optionally, the relevant information of the RACH configuration includes at least one of following:
an identifier of the one or more first features associated with the RACH configuration;
a feature priority parameter;
a random access purpose (raPurpose);
information related to reference signal received power (RSRP);
information related to physical RACH occasion (RO);
information related to preamble;
information related to physical uplink shared channel (PUSCH);
fallback indication information used to indicate fallback of random access (RA) mode;
information used to indicate a cell to which RA is initiated based on the RACH configuration;
information related to an RA priority parameter, where the RA priority parameter is associated with one or more second features;
information related to a feature triggering value, where the feature triggering value is associated with the one or more second features;
first indication information used to indicate whether the triggering value is reached;
second indication information used to indicate whether the terminal successfully accesses based on the RACH configuration.

Optionally, the first feature includes at least one of following:
small data transmission (SDT);
reduced capability (RedCap);
radio access network (RAN) slicing;
coverage enhancement (CE).

Optionally, the relevant information of the RACH configuration associated with the RAN slicing includes at least one of following:
feature information used to indicate that a feature is RAN slicing;
identification information used to identify RAN slicing.

Optionally, the raPurpose is an RACH partition; or
the raPurpose is the one or more first features associated with the RACH configuration.

Optionally, the information related to RSRP includes at least one of following:
RSRP measurement value;
third indication information used to indicate whether the RSRP measurement value exceeds an RSRP threshold, where the RSRP threshold is associated with one or more second features.

Optionally, the third indication information is indicated per RA attempt; or
the third indication information is indicated per RA procedure.

Optionally, the RSRP measurement value is any one of following:
an RSRP measurement value used to determine whether the RSRP threshold is exceeded;
an RSRP measurement value when recording of the relevant information is triggered.

Optionally, the RSRP threshold includes at least one of following:
an RACH configuration selection threshold corresponding to the one or more second features;
a feature triggering threshold corresponding to the one or more second features;
an RA mode selection threshold corresponding to the one or more second features;
a synchronization signal block (SSB) selection threshold corresponding to the one or more second features;
a carrier selection threshold corresponding to the one or more second features.

Optionally, the information related to RO includes information on frequency domain resource used by the terminal.

Optionally, the information related to RO includes at least one of following:
bandwidth part (BWP) information;
subcarrier spacing (SCS) information;
frequency domain resource starting position information;
frequency division multiplexing (FDM) information;
information on RO resource shared by the RACH configuration and another RACH configuration.

Optionally, the information related to preamble includes at least one of following:
number of preamble transmissions;
maximum number of preamble transmissions;
fourth indication information used to indicate whether the maximum number of preamble transmissions is exceeded.

Optionally, the number of preamble transmissions corresponds to at least one of following:
the one or more first features;
SSB;
GroupB-related configuration information.

Optionally, the information related to PUSCH includes at least one of following:
information on PUSCH resource used by the terminal;
information on a load of the PUSCH;
information on a transmission power of the PUSCH.

Optionally, the information related to PUSCH includes at least one of following:
information related to PUSCH of message 3 (Msg3);
information related to PUSCH of message A (MsgA).

Optionally, the information related to PUSCH includes at least one of following:
an absolute value of a transmission power of the PUSCH;
an offset of the transmission power of the PUSCH relative to a transmission power of preamble.

Optionally, the fallback indication information is used to indicate at least one of following:
the terminal to fall back from a two-step RA associated with the one or more first features to a four-step RA associated with the one or more first features;
the terminal to fall back from contention free random access (CFRA) to contention based random access (CBRA) associated with the one or more first features.

Optionally, the cell includes at least one of following:
a primary cell (Pcell);
a secondary cell (Scell);
a special cell (Spcell).

Optionally, the RA priority parameter includes at least one of following:
a list of the one or more second features;
power ramping step size;
fallback indicator factor.

Optionally, RA includes at least one of following:
two-step RA and/or four-step RA;
CBRA and/or CFRA.

Optionally, recording the relevant information of the RACH configuration includes:
adding the relevant information to a report variable.

Optionally, the report variable includes at least one of following:
a radio link failure (RLF) report variable;
an RA report variable;
a handover success report variable;
a report variable used to add the relevant information.

Optionally, recording the relevant information of the RACH configuration includes at least one of following:
recording the relevant information when RLF recording is triggered;
recording the relevant information when RA recording is triggered;
recording the relevant information when recording of successful handover is triggered;
recording the relevant information when RA fails;
recording the relevant information when receiving first information sent by a network side device, where the first information is used to indicate the terminal to record the relevant information.

Optionally, the first information is at least one of following:
an RACH configuration associated with one or more features;
recording indication information used to indicate the terminal to record the relevant information.

Optionally, the first information is used to indicate at least one of following:
the terminal to record the relevant information of an RACH configuration associated with any feature;
the terminal to record the relevant information of an RACH configuration associated with one or more specified features.

Optionally, recording the relevant information of the RACH configuration includes at least one of following:
recording the relevant information of an RACH configuration associated with any feature;
recording the relevant information of an RACH configuration associated with one or more specified features.

According to a second aspect of embodiments of the present disclosure, an information sending method is provided. The method is performed by a network side device and includes:
sending first information, where the first information is used to indicate a terminal to record relevant information of a random access channel (RACH) configuration, and the RACH configuration is associated with one or more first features.

The first information may be at least one of following:
an RACH configuration associated with one or more features;
recording indication information used to indicate the terminal to record the relevant information.

Optionally, the first information is used to indicate at least one of following:
the terminal to record the relevant information of an RACH configuration associated with any feature;
the terminal to record the relevant information of an RACH configuration associated with one or more specified features.

Optionally, the first feature includes at least one of following:
small data transmission (SDT);
reduced capability (RedCap);
radio access network (RAN) slicing;
coverage enhancement (CE).

Optionally, the relevant information of the RACH configuration associated with the RAN slicing includes at least one of following:
feature information used to indicate that a feature is RAN slicing;
identification information used to identify RAN slicing.

According to a third aspect of embodiments of the present disclosure, an information recording apparatus is provided. The apparatus is applied to a terminal and includes:
a recording module, configured to record relevant information of a random access channel (RACH) configuration, where the RACH configuration is associated with one or more first features.

According to a fourth aspect of embodiments of the present disclosure, an information sending apparatus is provided. The apparatus is applied to a network side device and includes:
a sending module, configured to send first information, where the first information is used to indicate a terminal to record relevant information of a random access channel (RACH configuration), and the RACH configuration is associated with one or more first features.

According to a fifth aspect of embodiments of the present disclosure, a computer readable storage medium is provided, where the storage medium stores a computer program, and the computer program is used for implementing the information recording method according to any embodiment described above.

According to a sixth aspect of embodiments of the present disclosure, a computer readable storage medium is provided, where the storage medium stores a computer program, and the computer program is used for implementing the information sending method according to any embodiment described above.

According to a seventh aspect of embodiments of the present disclosure, an information recording apparatus is provided, including:
a processor; and
a memory configured to store instructions executable by the processor;
where the processor is configured to implement the information recording method according to any embodiment described above.

According to an eighth aspect of embodiments of the present disclosure, an information sending apparatus is provided, including:
a processor; and
a memory configured to store instructions executable by the processor;
where the processor is configured to implement the information sending method according to any embodiment described above.

The technical solutions according to some embodiments of the present disclosure may include the following beneficial effects.

The present disclosure can enable the terminal side to record the relevant information of the RACH configuration associated with one or more first features, thereby assisting the network side device in optimizing the RACH configuration with high availability.

It should be understood that the foregoing general description and the following detailed description are exemplary and explanatory only, and do not limit the present disclosure.

### BRIEF DESCRIPTION OF THE DRAWINGS

The accompanying drawings, which are incorporated in and constitute a part of this specification, illustrate embodiments consistent with the invention and together with the description serve to explain the principles of the invention.
FIG. 1 is a schematic flowchart of an information recording method according to an exemplary embodiment.
FIG. 2 is a schematic flowchart of another information recording method according to an exemplary embodiment.
FIG. 3A is a schematic flowchart of another information recording method according to an exemplary embodiment.
FIG. 3B is a schematic flowchart of another information recording method according to an exemplary embodiment.
FIG. 4 is a schematic flowchart of an information sending method according to an exemplary embodiment.
FIG. 5 is a block diagram of an information recording apparatus according to an exemplary embodiment.
FIG. 6 is a block diagram of an information sending apparatus according to an exemplary embodiment.
FIG. 7 is a schematic structural diagram of an information recording apparatus according to an exemplary embodiment of the present disclosure.
FIG. 8 is a schematic structural diagram of an information sending apparatus according to an exemplary embodiment of the present disclosure.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the invention. Rather, they are merely examples of apparatus and methods consistent with aspects of the invention as detailed in the appended claims.

The terminology used in this disclosure is for the purpose of describing particular embodiments only and is not intended to be limiting of the disclosure. As used in this disclosure and the appended claims, the singular forms "a/an," "the" and "said" are intended to include the plural forms as well, unless the context clearly dictates otherwise. It will also be understood that the term "and/or" as used herein refers to and includes any and all possible combinations of at least one associated listed item.

It should be understood that although the terms first, second, third, etc. may be used in this disclosure to describe various information, the information should not be limited to these terms. These terms are only used to distinguish information of the same type from each other. For example, without departing from the scope of the present disclosure, the first information may also be called second information, and similarly, the second information may also be called first information. Depending on the context, the word "if" as used herein may be interpreted as "when" or "while" or "in response to determining."

The inventor found during research that early identification of features/feature combinations may be achieved by configuring specific RACH configurations for multiple features or feature combinations. In other words, the terminal initiates random access (RA) based on a specific RACH configuration, and the specific RACH configuration corresponds to a specific feature/feature combination, then the network side device can realize early detection of the feature or feature combination by identifying the RACH configuration selected by the terminal. Identify. The one or more (specified) features involved in this disclosure refers to one or more individual features. For example, the feature may be one of SDT (Small Data Transmission), RedCap (Reduced Capability), RAN (Radio Access Network) slicing, and CE (Coverage Enhancement). The feature combination may refer to a feature combination composed of two or more of the aforementioned features.

Alternatively, the one or more (specified) features involved in this disclosure refer to one or more R17 feature combinations. For example, one feature combination is SDT and CE, and another feature combination is RedCap and RAN slicing.

In other words, one or more features in the present disclosure may be individual one or a combination of R17 features, which is not limited in the present disclosure.

It should be noted that the plurality of first features mentioned later in this disclosure indicate a first combination of features, and the plurality of second features indicate a second combination of features.

The information recording method provided by this disclosure is first introduced from the terminal side.

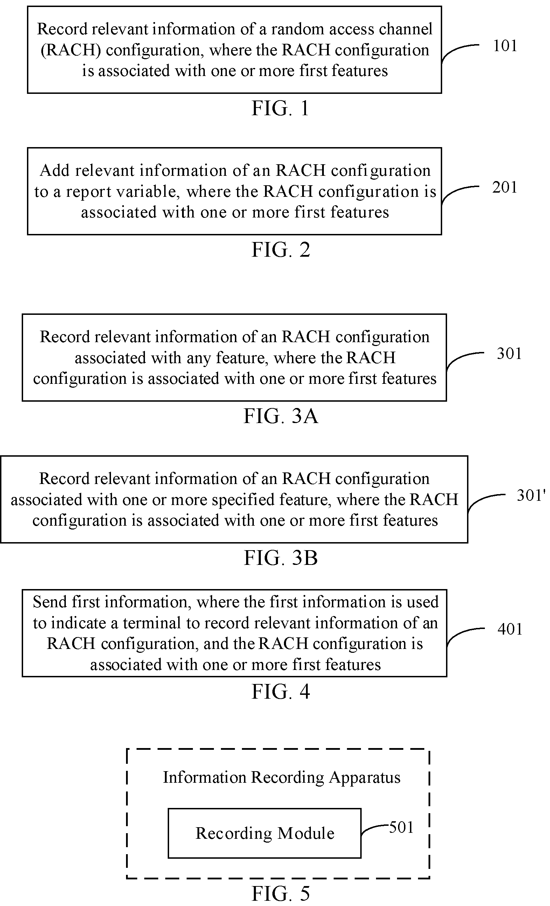

An embodiment of the present disclosure provides an information recording method. Refer to FIG. 1. FIG. 1 is a flow chart of an information recording method according to an embodiment, which may be performed by a terminal. The method may include the following step.

In step 101, relevant information of a random access channel (RACH) configuration is recorded, where the RACH configuration is associated with one or more first features.

In some embodiments of the present disclosure, the first feature includes but is not limited to at least one of the following: SDT; RedCap; RAN slicing; CE.

In some embodiments, in response to the one or more first features including RAN slicing, the relevant information of the RACH configuration associated with RAN slicing may include but is not limited to at least one of the following: feature information indicating that the feature is RAN slicing; identification information used to identify RAN slicing.

In some embodiments, the identification information of RAN slicing may be an NSAG (Network Slice AS Group) identifier, an RAN slicing identifier, or the like. The RAN slicing identifier may be S-NSSAI (Single Network Slice Selection Assistance Information) or NSSAI (Network Slice Selection Assistance Information), which is not limited in this disclosure.

In a possible implementation, the RACH configuration is an RACH configuration used by the terminal, and the one or more first features are associated with the RACH configuration used by the terminal.

In another possible implementation, the RACH configuration is an RACH configuration configured by the network side device, and the one or more first features are associated with the RACH configuration configured by the network side device.

In another possible implementation, the RACH configuration may be any RACH configuration, and the one or more first features are associated with any RACH configuration.

In the above embodiments, the terminal side is enabled to record the relevant information of the RACH configuration associated with one or more first features, thereby assisting the network side device in optimizing the RACH configuration with high availability.

In some optional embodiments, the relevant information of the RACH configuration includes at least one of following:
(1) an identifier of the one or more first features associated with the RACH configuration;
(2) a feature priority parameter;
(3) a random access purpose (raPurpose);
(4) information related to reference signal received power (RSRP);
(5) information related to physical RACH occasion (RO);
(6) information related to preamble;
(7) information related to physical uplink shared channel (PUSCH);
(8) fallback indication information used to indicate fallback of random access (RA) mode;
(9) information used to indicate a cell to which RA is initiated based on the RACH configuration;
(10) information related to an RA priority parameter, where the RA priority parameter is associated with one or more second features;
(11) information related to a feature triggering value, where the feature triggering value is associated with the one or more second features;
(12) first indication information used to indicate whether the feature triggering value is reached;
(13) second indication information used to indicate whether the terminal successfully accesses based on the RACH configuration.

In some embodiments of the present disclosure, the second feature may include but is not limited to at least one of the following: SDT; RedCap; RAN slicing; CE. The second feature may be the same as the first feature, or the second feature may be independent of the first feature, i.e., the second feature may be different from the first feature.

For example, the RACH configuration finally used by the terminal may be associated with the first feature "RAN slicing", and the terminal can record the relevant information of the RA priority parameter associated with the second feature "RAN slicing". In this case, the second feature is the same as the first feature.

For another example, the RACH configuration finally used by the terminal may be associated with the first feature "RedCap", and the terminal may record the feature triggering value associated with the second feature "SDT".

In the above embodiments, the terminal side is able to record the relevant information of the RACH configuration associated with one or more first features, thereby assisting the network side device in optimizing the RACH configuration with high availability.

Subsequently, the above-mentioned relevant information of RACH configuration will be explained one by one. However, those skilled in the art can understand that although the relevant information of these RACH configurations is explained separately, it does not mean that the relevant information of these RACH configurations must exist separately. Those skilled in the art can understand that the aforementioned relevant information (1) to (13) of RACH configuration may be combined and used in any manner.
(1) In some optional embodiments, the relevant information of the RACH configuration includes the identifier of one or more first features associated with the RACH configuration.

In a possible implementation, the first feature includes but is not limited to at least one of the following: SDT; RedCap; RAN slicing; CE.

The relevant information of the RACH configuration associated with the RAN slicing includes at least one of the following: feature information used to indicate that the feature is RAN slicing; identification information used to identify RAN slicing.

In some embodiments, the identification information of RAN slicing may be NSAG identifier, RAN slicing identifier, or the like. The RAN slicing identifier may be S-NSSAI or NSSAI, which are only examples and not limited in this disclosure.

In a possible implementation, the one or more first features may be associated with the RACH configuration used by the terminal; or the one or more first features may be associated with the RACH configuration configured by the network side device; or the one or more first features may be associated with any RACH configuration, which is not limited by this disclosure.

(2) In some optional embodiments, the relevant information of the RACH configuration includes the feature priority parameter.

It should be noted here that for the feature priority parameter, the terminal may record the feature priority parameter of one or more features included in the first feature; or may record the feature priority parameter configured by the network side device; or may record the feature priority parameter of one or more features that triggers RA, which is not limited by this disclosure.

(3) In some optional embodiments, the relevant information of the RACH configuration includes raPurpose.

In a possible implementation, raPurpose may be a RACH partition.

In another possible implementation, raPurpose may be the one or more first features associated with the RACH configuration.

In some embodiments, the first feature includes but is not limited to at least one of the following: SDT; RedCap; RAN slicing; CE. For the definition of the first feature, reference may be made to the descriptions in other parts of the embodiments of the present disclosure, which will not be described again here.

(4) In some optional embodiments, the relevant information of the RACH configuration includes the RSRP-related information.

In a possible implementation, the RSRP-related information includes but is not limited to at least one of the following: RSRP measurement value; third indication information used to indicate whether the RSRP measurement value exceeds the RSRP threshold, wherein the RSRP threshold is associated with one or more second features.

In a possible implementation, the second feature may be the same as the first feature; or the second feature may be independent of the first feature, that is, the second feature may different from the first feature, which is not limited in this disclosure.

In some embodiments of the present disclosure, the RSRP measurement value may be an RSRP measurement value used to determine whether the RSRP threshold is exceeded; or the RSRP measurement value may be an RSRP measurement value when the recording of the relevant information is triggered, which is not limited in the present disclosure.

In a possible implementation, the third indication information may be indicated per RA attempt. Each RA procedure may include multiple RA attempts.

In another possible implementation, the third indication information may be indicated per RA procedure. Each RA procedure may include multiple RA attempts.

In some embodiments of the present disclosure, the above-mentioned RSRP threshold includes but is not limited to at least one of the following: an RACH configuration selection threshold corresponding to the one or more second features; a feature triggering threshold corresponding to the one or more second features; an RA mode selection threshold corresponding to the one or more second features; an SSB (Synchronization Signal Block) selection threshold corresponding to the one or more second features; a carrier selection threshold corresponding to the one or more second features.

In some embodiments, the RACH configuration selection threshold corresponding to the one or more second features may be a selection threshold of the RACH configuration associated with the one or more second features, where the selection threshold is used by the terminal device to determine, according to the RSRP measurement value, an RACH configuration associated with the second feature of RACH corresponding to the RSRP measurement value.

For example, the RACH configuration selection threshold is expressed as rsrp-ThresholdMsg3 (e.g., it may be rsrp-ThresholdMsg3-r17). When the RSRP measurement value exceeds the RACH configuration selection threshold, the terminal adopts the RACH configuration associated with CE. Herein, a triggering threshold corresponding to the one or more second features may be an RSRP threshold corresponding to the one or more second features and used to determine whether the second feature is triggered.

For another example, the triggering threshold corresponding to SDT is expressed as sdt-RSRP-Threshold. When the received signal strength on the terminal side exceeds sdt-RSRP-Threshold, the SDT procedure may be triggered.

Herein, the RA mode selection threshold corresponding to the one or more second features may be a selection threshold of two-step RA and four-step RA corresponding to the one or more second features, where the selection threshold is used by the terminal device to determine, according to the RSRP measurement value, an RACH configuration of the two-step RA or an RACH configuration of the four-step RA corresponding to the RSRP measurement value.

For example, the RA mode selection threshold is expressed as msgA-RSRP-Threshold (e.g., it may be msgA-RSRP-Threshold-r17). When the RSRP measurement value exceeds the RA mode selection threshold, the terminal selects the two-step RA mode; otherwise, the terminal selects the four-step RA mode. Alternatively, the opposite can also be done, that is, the RA mode selection threshold can also be expressed in other forms; when the RSRP measurement value exceeds the RAmode selection threshold, the terminal selects the four-step RA mode; otherwise, the terminal selects the two-step RA mode.

The SSB selection threshold corresponding to the one or more second features may be a threshold for selecting an SSB corresponding to the one or more second features.

For example, the SSB selection threshold is expressed as rsrp-ThresholdSSB (e.g., it may be rsrp-ThresholdSSB-r17). When the RSRP measurement value exceeds the SSB selection threshold, the terminal selects the corresponding SSB.

For another example, the SSB selection threshold is expressed as cg-SDT-RSRP-ThresholdSSB. For CG (Configured Grant)-SDT, when the RSRP measurement value exceeds the SSB selection threshold, the terminal selects the corresponding SSB.

The carrier selection threshold corresponding to the one or more second features may refer to a threshold for selecting a carrier corresponding to the one or more second features.

For example, the carrier selection threshold is expressed as rsrp-ThresholdSSB-SUL. When the RSRP measurement value exceeds the carrier selection threshold, the terminal selects an SUL (Supplementary Uplink) carrier.

(5) In some optional embodiments, the relevant information of the RACH configuration includes the RO-related information.

In a possible implementation, the RO-related information includes information on frequency domain resource used by the terminal.

In another possible implementation, the RO-related information includes but is not limited to at least one of the following: BWP (bandwidth part) information; SCS (subcarrier spacing) information; frequency start (frequency domain resource starting position) information; FDM (frequency division multiplexing) information; information on RO resource shared by the RACH configuration and another RACH configuration.

In some embodiments, BWP information, SCS information, frequency start information, and FDM information all belong to information on the frequency domain resource used by the terminal.

In addition, the another RACH configuration(s) may be an RACH configuration(s) associated with one or more other features (the features are different from the first features). Alternatively, the another RACH configuration(s) may be a legacy RACH configuration(s), which refers to an existing RACH configuration in related art that is not associated with any feature.

(6) In some optional embodiments, the relevant information of the RACH configuration includes the preamble-related information.

In a possible implementation, the preamble-related information includes but is not limited to at least one of the following: the number of preamble transmissions; the maximum number of preamble transmissions; fourth indication information used to indicate whether the maximum number of preamble transmissions is exceeded.

The number of preamble transmissions may correspond to the one or more first features. Alternatively, the number of preamble transmissions may correspond to SSB. Alternatively, the number of preamble transmissions may correspond to GroupB (group B) related configuration information.

For example, the number of preamble transmissions may correspond to at least one of the following:
numberOfRA-PreamblesGroupA,
messagePowerOffsetGroupB,
ra-SizeGroupA.

The maximum number of preamble transmissions may be the maximum number of times the terminal supports for transmitting the preamble in each RA procedure.

The fourth indication information may be used to indicate whether the number of preamble transmissions has exceeded the maximum number of preamble transmissions.

The "numberOfRA-PreamblesGroupA" is numberOfRA-PreamblesGroupA-r17, the "messagePowerOffsetGroupB" is numberOfRA-PreamblesGroupA-r17, and the "ra-SizeGroupA" is ra-SizeGroupA-r17.

(7) In some optional embodiments, the relevant information of the RACH configuration includes the PUSCH-related information.

In a possible implementation, the PUSCH-related information includes but is not limited to at least one of the following: information on PUSCH resource used by the terminal; PUSCH load information; PUSCH transmission power information.

In a possible implementation, the PUSCH-related information includes but is not limited to at least one of the following: PUSCH-related information of message 3; PUSCH-related information of message A.

In another possible implementation, the PUSCH-related information may include a combination of the above information.

For example, the PUSCH-related information may include: information on PUSCH resource used by the terminal; PUSCH load information of message 3 (msg3-PUSCH-PayloadSize); PUSCH load information of message A (msgA-PUSCH-PayloadSize); PUSCH transmission power information of message 3 (msg3-PUSCH transmission power information); PUSCH transmission power information of message A (msgA-PUSCH transmission power information).

In another possible implementation, the PUSCH-related information may include, but is not limited to, at least one of the following: an absolute value of the transmission power of the PUSCH; an offset of the transmission power of the PUSCH relative to the transmission power of the preamble.

(8) In some optional embodiments, the relevant information of the RACH configuration includes the fallback indication information.

In a possible implementation, the fallback indication information is used to indicate at least one of the following: the terminal to fall back from two-step RA associated with the one or more first features to four-step RA associated with the one or more first features; the terminal to fall back from CFRA (Contention Free Random Access) to CBRA (Contention Based Random Access) associated with the one or more first features.

(9) In some optional embodiments, the relevant information of the RACH configuration includes the information used to indicate a cell to which RA is initiated based on the RACH configuration.

In a possible implementation, the cell may be at least one of a Pcell (Primary cell), an Scell (Secondary cell), and an Spcell (Special cell).

In some embodiments, Spcell generally includes Pcell and PScell (Primary Secondary cell).

(10) In some optional embodiments, the relevant information of the RACH configuration includes the information related to an RA priority parameter, where the RA priority parameter is associated with one or more second features.

The second feature may be the same as the first feature, or may be different, which is not limited in this disclosure.

In a possible implementation, the RA priority parameter may include but is not limited to at least one of the following: a list of the one or more second features; a power ramping step size (powerRampingStepHighPrioritiy); a fallback indication factor (scalingFactorBI).

The list may include the one or more second features. For example, the list may be an NSAG identification list.

(11) In some optional embodiments, the relevant information of the RACH configuration includes the information related to a feature triggering value, where the feature triggering value is associated with one or more second features.

The second feature may be the same as the first feature, or may be different, which is not limited in this disclosure.

In a possible implementation, when the feature triggering value is reached, the terminal can trigger a corresponding feature.

For example, the data volume threshold of SDT is expressed as sdt-DataVolumeThreshold. When the terminal data volume reaches the data volume threshold of SDT, the SDT procedure is triggered.

(12) In some optional embodiments, the relevant information of the RACH configuration includes the first indication information used to indicate whether a feature triggering value is reached, where the feature triggering value is associated with one or more second features.

The second feature may be the same as the first feature, or may be different, which is not limited in this disclosure.

In a possible implementation, when the feature triggering value is reached, the terminal can trigger a corresponding feature. For example, the data volume threshold of SDT is expressed as sdt-DataVolumeThreshold. When the terminal data volume reaches the data volume threshold of SDT, the SDT procedure may be executed.

(13) In some optional embodiments, the relevant information of the RACH configuration includes the second indication information used to indicate whether the terminal successfully accesses based on the RACH configuration.

In some optional embodiments, the relevant information of the RACH configuration includes one or a combination of more than one of the above information, which is not limited in this disclosure.

In some optional embodiments, the RA involved in the present disclosure may include two-step RA and/or four-step RA; and/or, the RA involved in the present disclosure may include CBRA and/or CFRA.

In some optional embodiments, referring to FIG. 2, it is a flow chart of an information determining method according to an embodiment, which may be performed by a terminal. The method may include the following steps.

In step 201, relevant information of an RACH configuration is added to a report variable, where the RACH configuration is associated with one or more first features.

It should be noted that step 201 may be performed alone or in combination with other embodiments of the present disclosure. For example, it may be performed in combination with step 101, or in combination with any subsequent steps, or in combination and together with any several steps according to some embodiments of the present disclosure.

In some embodiments of the present disclosure, the "report variable" may refer to a parameter or parameter set of the terminal/UE (user equipment).

In some embodiments of the present disclosure, the first feature includes but is not limited to at least one of the following: SDT; RedCap; RAN slicing; CE.

The relevant information of the RACH configuration associated with RAN slicing may include but is not limited to at least one of the following: feature information used to indicate that the feature is RAN slicing; identification information used to identify RAN slicing.

In some embodiments, the identification information of RAN slicing may be an NSAG identifier, an RAN slicing identifier, or the like, where the RAN slicing identifier may be S-NSSAI or NSSAI, which is not limited in this disclosure.

In a possible implementation, the RACH configuration is an RACH configuration used by the terminal, and the one or more first features are associated with the RACH configuration used by the terminal.

In another possible implementation, the RACH configuration is an RACH configuration configured by the network side device, and the one or more first features are associated with the RACH configuration configured by the network side device.

In another possible implementation, the RACH configuration may be any RACH configuration, and the one or more first features are associated with any RACH configuration.

In a possible implementation, the report variable may reuse existing report variables. It includes but is not limited to at least one of the following: RLF (Radio Link Failure) report variable; RA report variable; handover success report variable; report variable used to add the relevant information.

In some embodiments, the RLF report variable may refer to VarRLF-Report variable (e.g., VarRLF-Report-r16), the RA report variable may refer to VarRA-Report variable (e.g., VarRA-Report-r16), and the handover success report variable may refer to VarSuccessHO-Report.

In a possible implementation, the report variable may use an independent report variable, that is, an independent report variable used to add the relevant information. For example, the report variable may be represented as VarRApartition-Report.

In the above embodiments, the terminal may add the relevant information of the RACH configuration to an existing report variable or an independent report variable, thereby assisting the network side device in optimizing the RACH configuration with high availability.

In some optional embodiments, the terminal may trigger recording of the relevant information of the RACH configuration when at least one of the following conditions occurs.

In condition 1, when RLF recording is triggered, the terminal records the relevant information of the RACH configuration. Accordingly, the terminal may add the relevant information of the RACH configuration to the RLF report variable, where the RACH configuration is associated with the one or more first features.

In condition 2, when RA recording is triggered, the terminal records the relevant information of the RACH configuration. Accordingly, the terminal may add the relevant information of the RACH configuration to the RA report variable, where the RACH configuration is associated with the one or more first features.

In condition 3, when handover success recording is triggered, the terminal records the relevant information of the RACH configuration. Accordingly, the terminal may add the relevant information of the RACH configuration to the handover success report variable, where the RACH configuration is associated with the one or more first features.

In condition 4, when RA fails, the terminal records the relevant information of the RACH configuration. Accordingly, the terminal may add the relevant information of the RACH configuration to the RA report variable, or to the RLF report variable, or to the report variable used to add the relevant information, where the RACH configuration is associated with the one or more first features.

In condition 5, when receiving first information sent by the network side device, the terminal records the relevant information of the RACH configuration, where the first information is used to indicate the terminal to record the relevant information.

In some embodiments of the present disclosure, the network side device includes any network side node. For example, the network side node may be a CN (Core Network) side node, an RAN side node, or the like, which is not limited in this disclosure. Herein, the RACH configuration is associated with the one or more first features. In a possible implementation, the first information may be at least one of the following: the RACH configuration associated with one or more features; recording indication information used to indicate the terminal to record the relevant information.

In another possible implementation, the first information may be used to indicate at least one of the following: the terminal to record the relevant information of an RACH configuration associated with any feature; the terminal to record the relevant information of an RACH configuration associated with one or more specified features. Correspondingly, after receiving the first information, the terminal can add, based on the first information, the relevant information of the RACH configuration to an existing report variable or to an independent report variable, which is not limited by the present disclosure.

When one of the above conditions 1 to 5 occurs, the terminal may record the relevant information of the RACH configuration, where the RACH configuration is associated with the one or more first features.

Alternatively, when a combination of the above conditions occurs, the terminal records the relevant information of the RACH configuration. For example, when the terminal receives the first information sent by the network side device and an RA failure occurs, the terminal records the relevant information of the RACH configuration, where the RACH configuration is associated with the one or more first features.

In the above embodiments, the terminal can trigger recording of the relevant information of the RACH configuration based on different conditions, thereby assisting the network side device in optimizing the RACH configuration with high availability.

In some optional embodiments, referring to FIG. 3A, it is a flow chart of an information recording method according to an embodiment, which may be performed by a terminal. The method may include the following steps.

In step 301, relevant information of an RACH configuration associated with any feature is recorded, where the RACH configuration is associated with one or more first features.

It should be noted that step 301 may be performed alone or in combination with other embodiments of the present disclosure. For example, it may be performed in combination with step 101, or in combination with step 201, or in combination and together with any several steps according to some embodiments of the present disclosure.

For detailed description of the relevant information of the RACH configuration, reference may be made to the description of other embodiments of the present disclosure, which will not be repeated here.

In some embodiments of the present disclosure, the first feature includes but is not limited to at least one of the following: SDT; RedCap; RAN slicing; CE.

The relevant information of the RACH configuration associated with RAN slicing may include but is not limited to at least one of the following: feature information used to indicate that the feature is RAN slicing; identification information used to identify RAN slicing.

In some embodiments, the identification information of RAN slicing may be an NSAG identifier, an RAN slicing identifier, or the like, where the RAN slicing identifier may be S-NSSAI or NSSAI, which is not limited in this disclosure.

In some embodiments of the present disclosure, the one or more first features may be associated with an RACH configuration used by the terminal, or the one or more first features may be associated with an RACH configuration configured by the network side device, or the one or more first features may be associated with any RACH configuration, which is not limited in this disclosure.

The terminal may record the relevant information of the RACH configuration associated with any feature when at least one of the above condition 1 to 5 occurs, where the RACH configuration is associated with the one or more first features.

In a possible implementation, when RLF recording is triggered, the terminal adds the relevant information of the RACH configuration associated with any feature or feature combination to the RLF report variable, where the RACH configuration is associated with the one or more first features. In another possible implementation, when RA recording is triggered, the terminal adds the relevant information of the RACH configuration associated with any feature to the RA report variable, where the RACH configuration is associated with the one or more first features. In another possible implementation, when the handover success recording is triggered, the terminal determines the relevant information of the RACH configuration associated with any feature and, further, may add the relevant information of the RACH configuration associated with any feature to the handover success report variable, where the RACH configuration is associated with the one or more first features.

In another possible implementation, when RA fails, the terminal records the relevant information of the RACH configuration associated with any feature, where the RACH configuration is associated with the one or more first features. In another possible implementation, when the terminal receives the first information sent by the network side device, the terminal records the relevant information of the RACH configuration associated with any feature, where the RACH configuration is associated with one or more first features.

Herein, the first information may be at least one of the following: RACH configuration associated with one or more features; recording indication information used to indicate the terminal to record the relevant information.

Alternatively, the first information may be used to indicate at least one of the following: the terminal to record the relevant information of the RACH configuration associated with any feature; the terminal to record the relevant information of the RACH configuration associated with one or more specified features.

For example, the network side device indicates, through the first information, the terminal to record the relevant information of the RACH configuration associated with RedCap, RAN Slicing, and SDT; and when the terminal has relevant information of an RACH configuration associated with CE, it can perform recording.

In a possible implementation, the terminal may perform recording according to each feature or each combination of features, which is not limited by this disclosure.

In some embodiments of the present disclosure, when the terminal has the relevant information of the RACH configuration associated with any feature, the relevant information of the RACH configuration associated with any feature may be recorded. The "terminal has" here can refer to that the relevant information of the RACH configuration associated with any feature is determined and indicated by MAC (Media Access Control) layer, RRC (Radio Resource Control) layer, or higher layer of the terminal, which is deemed that the terminal has the relevant information of the RACH configuration associated with any feature. At this time, the terminal can record the relevant information of the RACH configuration associated with any feature.

In the above embodiments, the terminal supports recording the relevant information of the RACH configuration associated with any feature, thereby assisting the network side device in optimizing the RACH configuration with high availability.

In some optional embodiments, referring to FIG. 3B, which is a flow chart of an information recording method according to an embodiment, which may be performed by a terminal. The method may include the following steps.

In step 301', relevant information of an RACH configuration associated with one or more specified features is recorded, where the RACH configuration is associated with one or more first features.

It should be noted that step 301' may be performed alone or in combination with other embodiments of the present disclosure. For example, it may be performed in combination with step 101, or in combination with step 201, or in combination and together with any several steps according to some embodiments of the present disclosure.

For detailed description of the relevant information of the RACH configuration, reference may be made to the description of other embodiments of the present disclosure, which will not be repeated here.

In some embodiments of the present disclosure, the one or more specified features may be features or a combination of features specified by the network side device, and/or the one or more specified features may be features or a combination of features determined by the terminal.

In a possible implementation, the terminal records relevant information of the RACH configuration associated with features that completely match the one or more specified features, where the RACH configuration is associated with one or more first features.

For example, a feature (or feature combination) specified by the network side device is SDT, and a specified feature combination is RedCap and RAN slicing. The terminal may record relevant information of an RACH configuration associated with a completely matching feature(s), that is, the terminal records relevant information of an RACH configuration associated with SDT, and records relevant information of an RACH configuration associated with RedCap and RAN slicing.

In another possible implementation, the terminal records at least relevant information of an RACH configuration associated with the one or more specified features, where the RACH configuration is associated with one or more first features.

For example, the feature (or feature combination) specified by the network side device is SDT, and the specified feature combination is RedCap and RAN slicing. The terminal can record the relevant information of the RACH configuration associated with any one or more features of SDT or RedCap or RAN slicing. In other words, if it is the feature combination, the relevant information of the RACH configuration associated with each feature in the feature combination may be recorded, or the relevant information of the RACH configuration associated with one feature in the feature combination may be recorded, or the relevant information of the RACH configuration associated with a part of the features in the feature combination.

In a possible implementation, the terminal may perform recording according to each specified feature or each specified combination of features, which is not limited by this disclosure.

In the above embodiments, the terminal supports recording relevant information of the RACH configuration associated with one or more specified features, thereby assisting the network side device in optimizing the RACH configuration with high availability.

In some optional embodiments, when the terminal has relevant information of the RACH configuration associated with one or more specified features, or the network side device indicates, through the first information, the terminal to record the relevant information of the RACH configuration associated with one or more specified features, the features or combination of features associated with the relevant information of the RACH configuration information recorded by the terminal exactly match the features or combination of features configured by the network side device.

For example, the network side device indicates the terminal through the first information to record the relevant information of the RACH configuration associated with RedCap, RAN Slicing, and SDT, the terminal may perform the recording when having the relevant information of the RACH configuration associated with any feature of RedCap, RAN Slicing, and SDT.

Alternatively, the features or combination of features associated with the relevant information of the RACH configuration recorded by the terminal at least include features configured by the network side device.

For example, the network side device indicates the terminal through the first information to record the relevant information of the RACH configuration associated with RedCap, RAN Slicing, and SDT, the terminal may perform the recording when having the relevant information of the RACH configuration associated with SDT or RAN Slicing or RedCap.

Alternatively, the terminal records relevant information of the RACH configuration associated with any one or more features.

For example, the network side device indicates the terminal through the first information to record the relevant information of the RACH configuration associated with RedCap, RAN Slicing, and SDT, the terminal may perform the recording when having the relevant information of the RACH configuration associated with CE.

The terminal may add the above-mentioned relevant information of RACH configuration to any record report of RLF report variable, RA report variable, and handover success report variable. Alternatively, the terminal adds the above relevant information of RACH configuration to the report variable used to add the relevant information.

Optionally, the terminal may perform recording according to each feature or combination of features, which is not limited by this disclosure.

The above is only an illustrative description. In actual applications, solutions for recording the relevant information of the RACH configuration associated with the one or more first features based on the recording method provided by the present disclosure shall fall within the protection scope of the present disclosure.

Next, the information sending method provided by the present disclosure will be described from the base station side.

An embodiment of the present disclosure provides an information sending method. Referring to FIG. 4. FIG. 4 is a flow chart of an information sending method according to an embodiment, which may be performed by a network side device. The method may include the following steps.

In step 401, first information is sent, where the first information is used to indicate a terminal to record relevant information of an RACH configuration, and the RACH configuration is associated with one or more first features.

In some embodiments of the present disclosure, the network side device includes any network side node. For example, the network side node may be a CN side node, an RAN side node, or the like, which is not limited in this disclosure.

It should be noted that for detailed description of the features in the method performed by the network side device, reference may be made to the explanation of the corresponding features on the terminal side in some embodiments of the present disclosure, which will not be repeated here.

In a possible implementation, the first information may be used to indicate at least one of the following: RACH configuration associated with one or more features; recording indication information used to indicate the terminal to record the relevant information.

In another possible implementation, the terminal records the relevant information of the RACH configuration associated with any feature; or the terminal records the relevant information of the RACH configuration associated with one or more specified features.

In a possible implementation, the first feature includes at least one of the following: SDT; RedCap; RAN slicing; CE.

The relevant information of the RACH configuration associated with RAN slicing includes at least one of the following: feature information used to indicate that the feature is RAN slicing; identification information used to identify RAN slicing.

In some embodiments, the identification information of RAN slicing may be NSAG identifier, RAN slicing identifier, or the like. The RAN slicing identifier may be S-NSSAI or NSSAI, which is not limited in this disclosure.

The relevant information and recording process of the terminal recording the relevant information of the RACH configuration have been described on the terminal side and will not be repeated here.

In the above embodiments, the network side device can send the first information to indicate the terminal to record the relevant information of the RACH configuration, where the RACH configuration is associated with one or more first features, thereby assisting the network side device in optimizing the RACH configuration with high availability.

In some optional embodiments, the network side may not send the first information, and the terminal may record the relevant information of the RACH configuration associated with the one or more first features according to the above conditions 1 to 4.

The recording process has been described on the terminal side and will not be repeated here.

Corresponding to the foregoing application function implementation method embodiments, the present disclosure further provides an application function implementation apparatus embodiment.

Referring to FIG. 5, FIG. 5 is a block diagram of an information recording apparatus according to an exemplary embodiment. The apparatus is applied to a terminal and includes:
a recording module 501, configured to record relevant information of an RACH configuration, where the RACH configuration is associated with one or more first features.

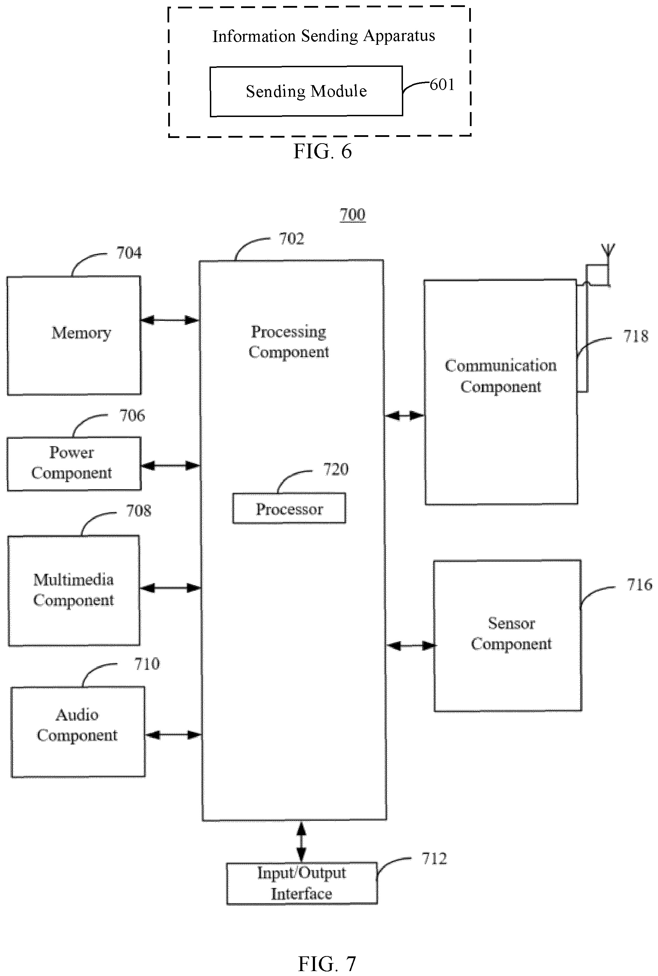

Referring to FIG. 6, FIG. 6 is a block diagram of an information sending apparatus according to an exemplary embodiment. The apparatus is applied to a network side device and includes:
a sending module 601, configured to send first information, where the first information is used to indicate the terminal to record relevant information of an RACH configuration, and the RACH configuration is associated with one or more first features.

As for the apparatus embodiments, since they basically correspond to the method embodiments, partial description of the method embodiments can be referred to for relevant details. The apparatus embodiments described above are only illustrative. The units described above as separate components may be or may not be physically separated. The components shown as units may be or may not be physical units, that is, they may be located in a place, or may be distributed across multiple network units. Some or all of the modules may be selected according to actual needs to achieve the purpose of the disclosed solution. Those skilled in the art can understand and implement the method without any creative effort.

Correspondingly, the present disclosure further provides a computer-readable storage medium that stores a computer program, where the computer program is used to implement the information recording method according to any embodiment described above.

Correspondingly, the present disclosure further provides a computer-readable storage medium that stores a computer program, where the computer program is used to implement the information sending method according to any embodiment described above.

Correspondingly, the present disclosure further provides an information recording apparatus, including:
a processor; and
a memory, configured to store instructions executable by the processor;
where the processor is configured to implement the information recording method according to any embodiment described above.

FIG. 7 is a block diagram showing an information recording apparatus 700 according to some embodiments. For example, the apparatus 700 may be a terminal including a mobile phone, a tablet computer, an e-book reader, a multimedia playback device, a wearable device, a vehicle-mounted user device, an ipad, a smart device and the like.

Referring to FIG. 7, the apparatus 700 may include one or more of the following components: processing component 702, memory 704, power component 706, multimedia component 708, audio component 710, input/output (I/O) interface 712, sensor component 716, and communication component 718.

The processing component 702 generally controls the overall operation of the apparatus 700, such as operations associated with display, phone calls, data random accesses, camera operations, and recording operations. The processing component 702 may include one or more processors 720 to execute instructions to perform all or some of the steps of the information recording method described above. Additionally, the processing component 702 may include one or more modules that facilitate interaction between the processing component 702 and other components. For example, the processing component 702 may include a multimedia module to facilitate interaction between the multimedia component 708 and the processing component 702. For another example, the processing component 702 may read executable instructions from the memory, so as to implement steps of the information recording method according to various embodiments described above.

The memory 704 is configured to store various types of data to support operation at the apparatus 700. Examples of such data include instructions, contact data, phonebook data, messages, pictures, videos, and the like for any application or method operating on the apparatus 700. The memory 704 may be implemented by any type of volatile or non-volatile storage device or combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic or optical disk.

The power component 706 provides power to various components of the apparatus 700. The power components 706 may include a power management system, one or more power sources, and other components associated with generating, managing, and distributing power to the apparatus 700.

The multimedia component 708 includes a screen that provides an output interface between the apparatus 700 and the user. In some embodiments, the multimedia component 708 includes a front camera and/or a rear camera. When the apparatus 700 is in an operation mode, such as a shooting mode or a video mode, the front camera and/or the rear camera may receive external multimedia data. Each of the front and rear cameras may be a fixed optical lens system or have focal length and optical zoom capability.

The audio component 710 is configured to output and/or input audio signals. For example, the audio component 710 includes a microphone (MIC) that is configured to receive external audio signals when the apparatus 700 is in operating modes, such as calling mode, recording mode, and voice recognition mode. The received audio signal may be further stored in the memory 704 or transmitted via the communication component 718. In some embodiments, the audio component 710 also includes a speaker for outputting audio signals.

The I/O interface 712 provides an interface between the processing component 702 and a peripheral interface module, which may be a keyboard, a click wheel, a button, or the like. These buttons may include, but are not limited to: home button, volume buttons, start button, and lock button.

The sensor component 716 includes one or more sensors for providing status assessments of various aspects of the apparatus 700. For example, the sensor component 716 can detect the open/closed state of the apparatus 700, the relative positioning of components, such as the display and keypad of the apparatus 700. The sensor component 716 can also detect a change in the position of the apparatus 700 or a component of the apparatus 700, the presence or absence of user contact with the apparatus 700, the orientation or acceleration/deceleration of the apparatus 700, and the temperature change of the apparatus 700. The sensor component 716 may include a proximity sensor configured to detect the presence of nearby objects in the absence of any physical contact. The sensor component 716 may also include a light sensor, such as a CMOS or CCD image sensor, for use in imaging applications. In some embodiments, the sensor component 716 may also include an acceleration sensor, a gyroscope sensor, a magnetic sensor, a pressure sensor, or a temperature sensor.

The communication component 718 is configured to facilitate wired or wireless communication between the apparatus 700 and other devices. The apparatus 700 may access wireless networks based on communication standards, such as WiFi, 2G, 3G, 4G, 5G or 6G, or a combination thereof. In some embodiments, the communication component 718 receives broadcast signals or broadcast relevant information from an external broadcast management system via a broadcast channel. In some embodiments, the communication component 718 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In some embodiments, the apparatus 700 may be implemented by one or more application specific integrated circuits (ASICs), digital signal processors (DSPs), digital signal processing devices (DSPDs), programmable logic devices (PLDs), field programmable gate array (FPGA), controller, microcontroller, microprocessor or other electronic component, which are configured to perform the information recording method at the terminal side according to any embodiment described above.

In some embodiments, there is also provided a non-transitory computer-readable storage medium including instructions, such as the memory 804 including instructions, executable by the processor 720 of the apparatus 700 to perform the information recording method described above. For example, the non-transitory computer-readable storage medium may be ROM, random access memory (RAM), CD-ROM, magnetic tape, floppy disk, optical data storage device, and the like.

Correspondingly, the present disclosure further provides an information sending apparatus, including:
a processor; and
a memory, configured to store instructions executable by the processor;
where the processor is configured to implement the information sending method according to any embodiment described above.

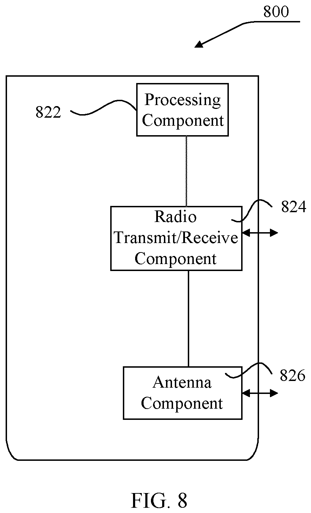

As shown in FIG. 8, FIG. 8 is a schematic structural diagram of an information sending apparatus according to an exemplary embodiment. The apparatus 800 may be provided as a network side device. Referring to FIG. 8, the apparatus 800 includes a processing component 822, a radio transmit/receive component 824, an antenna component 826, and a signal processing portion specific to the radio interface. The processing component 822 may further include at least one processor.

One of the processors in the processing component 822 may be configured to perform the information sending method according to any embodiment described above.

Other embodiments of this disclosure will be readily apparent to those skilled in the art from consideration of the specification and practice of the invention disclosed herein. This disclosure is intended to cover any modification, use or adaptation of this disclosure, and these modifications, uses or adaptations follow the general principles of this disclosure and include common knowledge or conventional technical means in the art, which are not disclosed in this disclosure. The specification and examples are to be considered exemplary only, with a true scope and spirit of the disclosure being indicated by the following claims.

It should be understood that this disclosure is not limited to the precise constructions which have been described above and shown in the drawings, and various modifications and changes may be made without departing from the scope thereof. The scope of this disclosure is limited only by the scope of the appended claims.

## Claims

1. An information recording method, **characterized in** being performed by a terminal and comprising:
recording relevant information of a random access channel (RACH) configuration, wherein the RACH configuration is associated with one or more first features.

2. The method according to claim 1, wherein the RACH configuration is an RACH configuration used by the terminal.

3. The method according to claim 1, wherein the relevant information of the RACH configuration comprises at least one of following:
an identifier of the one or more first features associated with the RACH configuration;
a feature priority parameter;
a random access purpose (raPurpose);
information related to reference signal received power (RSRP);
information related to physical RACH occasion (RO);
information related to preamble;
information related to physical uplink shared channel (PUSCH);
fallback indication information used to indicate fallback of random access (RA) mode;
information used to indicate a cell to which RA is initiated based on the RACH configuration;
information related to an RA priority parameter, wherein the RA priority parameter is associated with one or more second features;
information related to a feature triggering value, wherein the feature triggering value is associated with the one or more second features;
first indication information used to indicate whether the triggering value is reached;
second indication information used to indicate whether the terminal successfully accesses based on the RACH configuration.

4. The method according to claim 3, wherein the first feature comprises at least one of following:
small data transmission (SDT);
reduced capability (RedCap);
radio access network (RAN) slicing;
coverage enhancement (CE).

5. The method according to claim 4, wherein the relevant information of the RACH configuration associated with the RAN slicing comprises at least one of following:
feature information used to indicate that a feature is RAN slicing;
identification information used to identify RAN slicing.

6. The method according to claim 3, wherein the raPurpose is an RACH partition; or the raPurpose is the one or more first features associated with the RACH configuration.

7. The method according to claim 3, wherein the information related to RSRP comprises at least one of following:
RSRP measurement value;
third indication information used to indicate whether the RSRP measurement value exceeds an RSRP threshold, wherein the RSRP threshold is associated with one or more second features.

8. The method according to claim 7, wherein the third indication information is indicated per RA attempt; or
the third indication information is indicated per RA procedure.

9. The method according to claim 7, wherein the RSRP measurement value is any one of following:
an RSRP measurement value used to determine whether the RSRP threshold is exceeded;
an RSRP measurement value when recording of the relevant information is triggered.

10. The method according to claim 7, wherein the RSRP threshold comprises at least one of following:
an RACH configuration selection threshold corresponding to the one or more second features;
a feature triggering threshold corresponding to the one or more second features;
an RA mode selection threshold corresponding to the one or more second features;
a synchronization signal block (SSB) selection threshold corresponding to the one or more second features;
a carrier selection threshold corresponding to the one or more second features.

11. The method according to claim 3, wherein the information related to RO comprises information on frequency domain resource used by the terminal.

12. The method according to claim 3, wherein the information related to RO comprises at least one of following:
bandwidth part (BWP) information;
subcarrier spacing (SCS) information;
frequency domain resource starting position information;
frequency division multiplexing (FDM) information;
information on RO resource shared by the RACH configuration and another RACH configuration.

13. The method according to claim 3, wherein the information related to preamble comprises at least one of following:
number of preamble transmissions;
maximum number of preamble transmissions;
fourth indication information used to indicate whether the maximum number of preamble transmissions is exceeded.

14. The method according to claim 13, wherein the number of preamble transmissions corresponds to at least one of following:
the one or more first features;
SSB;
GroupB-related configuration information.

15. The method according to claim 3, wherein the information related to PUSCH comprises at least one of following:
information on PUSCH resource used by the terminal;
information on a load of the PUSCH;
information on a transmission power of the PUSCH.

16. The method according to claim 3, wherein the information related to PUSCH comprises at least one of following:
information related to PUSCH of message 3 (Msg3);
information related to PUSCH of message A (MsgA).

17. The method according to claim 3, wherein the information related to PUSCH comprises at least one of following:
an absolute value of a transmission power of the PUSCH;
an offset of the transmission power of the PUSCH relative to a transmission power of preamble.

18. The method according to claim 3, wherein the fallback indication information is used to indicate at least one of following:
the terminal to fall back from a two-step RA associated with the one or more first features to a four-step RA associated with the one or more first features;
the terminal to fall back from contention free random access (CFRA) to contention based random access (CBRA) associated with the one or more first features.

19. The method according to claim 3, wherein the cell comprises at least one of following:
a primary cell (Pcell);
a secondary cell (Scell);
a special cell (Spcell).

20. The method according to claim 3, wherein the RA priority parameter comprises at least one of following:
a list of the one or more second features;
power ramping step size;
fallback indicator factor.

21. The method according to any one of claims 1-20, wherein RA comprises at least one of following:
two-step RA and/or four-step RA;
CBRA and/or CFRA.

22. The method according to any one of claims 1-20, wherein recording the relevant information of the RACH configuration comprises:
adding the relevant information to a report variable.

23. The method according to claim 22, wherein the report variable comprises at least one of following:
a radio link failure (RLF) report variable;
an RA report variable;
a handover success report variable;
a report variable used to add the relevant information.

24. The method according to any one of claims 1-20, wherein recording the relevant information of the RACH configuration comprises at least one of following:
recording the relevant information when RLF recording is triggered;
recording the relevant information when RA recording is triggered;
recording the relevant information when recording of successful handover is triggered;
recording the relevant information when RA fails;
recording the relevant information when receiving first information sent by a network side device, wherein the first information is used to indicate the terminal to record the relevant information.

25. The method according to claim 24, wherein the first information is at least one of following:
an RACH configuration associated with one or more features;
recording indication information used to indicate the terminal to record the relevant information.

26. The method according to claim 24, wherein the first information is used to indicate at least one of following:
the terminal to record the relevant information of an RACH configuration associated with any feature;
the terminal to record the relevant information of an RACH configuration associated with one or more specified features.

27. The method according to any one of claims 1-20, wherein recording the relevant information of the RACH configuration comprises at least one of following:
recording the relevant information of an RACH configuration associated with any feature;
recording the relevant information of an RACH configuration associated with one or more specified features.

28. An information sending method, **characterized in** being performed by a network side device and comprising:
sending first information, wherein the first information is used to indicate a terminal to record relevant information of a random access channel (RACH) configuration, and the RACH configuration is associated with one or more first features.

29. The method according to claim 28, wherein the first information is at least one of following:
an RACH configuration associated with one or more features;
recording indication information used to indicate the terminal to record the relevant information.

30. The method according to claim 28, wherein the first information is used to indicate at least one of following:
the terminal to record the relevant information of an RACH configuration associated with any feature;
the terminal to record the relevant information of an RACH configuration associated with one or more specified features.

31. The method according to any one of claims 28-30, wherein the first feature comprises at least one of following:
small data transmission (SDT);
reduced capability (RedCap);
radio access network (RAN) slicing;
coverage enhancement (CE).

32. The method according to claim 31, wherein the relevant information of the RACH configuration associated with the RAN slicing comprises at least one of following:
feature information used to indicate that a feature is RAN slicing;
identification information used to identify RAN slicing.

33. An information recording apparatus, **characterized in** being applied in a terminal and comprising:
a recording module, configured to record relevant information of a random access channel (RACH) configuration, wherein the RACH configuration is associated with one or more first features.

34. An information sending apparatus, **characterized in** being applied in a network side device and comprising:
a sending module, configured to send first information, wherein the first information is used to indicate a terminal to record relevant information of a random access channel (RACH configuration), and the RACH configuration is associated with one or more first features.

35. A computer readable storage medium, **characterized in that** the storage medium stores a computer program thereon, wherein the computer program is used for implementing the information recording method according to any one of claims 1-27.

36. A computer readable storage medium, **characterized in that** the storage medium stores a computer program thereon, wherein the computer program is used for implementing the information sending method according to any one of claims 28-32.

37. An information recording apparatus, **characterized in** comprising:
a processor; and
a memory configured to store executable instructions of the processor,
wherein the processor is configured to implement the information recording method according to any one of claims 1-27.

38. An information sending apparatus, **characterized in** comprising:
a processor; and
a memory configured to store executable instructions of the processor,
wherein the processor is configured to implement the information sending method according to any one of claims 28-32.
